# EUROPEAN PATENT SPECIFICATION

(11) **EP 2 939 926 B1**
(45) Date of publication and mention of the grant of the patent: **17.04.2019**
(21) Application number: 15166126.1
(22) Date of filing: 01.05.2015
(51) Int. Cl.: B64D 13/06

(54) **AIRCRAFT ENVIRONMENTAL CONDITIONING SYSTEM AND METHOD**
FLUGZEUGKLIMATISIERUNGSSYSTEM UND -VERFAHREN
SYSTÈME DE CONDITIONNEMENT D'AIR D'UN AÉRONEF ET PROCÉDÉ

(30) Priority: 02.05.2014 US 201461987976 P; 06.02.2015 US 201514616121
(43) Date of publication of application: 04.11.2015
(73) Proprietor: Hamilton Sundstrand Corporation, Windsor Locks, CT 06096-1010 (US)
(72) Inventor: Lukens, William H., Windsor, CT 06095 (US); Rog, Lynn M., South Windsor, CT 06074 (US); D'Orlando, Paul M., Simsbury, CT 06070 (US); Devita, Francesco A., West Suffield, CT 06093 (US); Gatzuras, John T., Weatogue, CT 06089 (US); Hoyt, William D., Ellington, CT 06029 (US)
(74) Representative: Dehns

(56) References cited:
- EP-A1- 1 457 420
- US-A- 5 253 484
- US-A- 6 024 639
- US-A1- 2011 192 170

## Description

### BACKGROUND OF THE INVENTION

This invention relates to environmental air conditioning systems (ECS), and more specifically to air cycle environmental air conditioning systems such as used on aircraft.

Aircraft that fly at altitudes above that at which ambient air is suitable for crew, passengers, cargo, or equipment are often equipped with air cycle environmental air conditioning systems to provide pressurized conditioned air. These air conditioning systems typically utilize a pressurized air bleed from a turbine fan engine or an auxiliary power unit (APU), or in some cases from an electrically-powered compressor as a source of compressed air that flows along an airflow path through the air cycle environmental air conditioning system to produce conditioned air for the cockpit and passenger cabin or other pressurized areas of the aircraft. The compressed air that is fed into these systems is typically at a temperature and pressure far in excess of the normal temperature and pressure for conditioned air to be supplied to the cockpit and passenger cabin, so it must be expanded and cooled by the air conditioning system before it can be discharged as conditioned air. Aviation air cycle environmental conditioning systems typically process the bleed air through multiple cycles of cooling/pressure reduction and compression/heating. Cooling and pressure reduction is accomplished with heat exchangers (including condensers) and with turbines (which also extract work from the bleed air), while compression/heating is accomplished with compressors and reheaters. Many systems include at least one heat exchanger that utilizes external air to cool the bleed air, with a heat exchanger fan commonly included for augmenting external flow in conditions when ram inlet flow is not available.

Air cycle-based aviation ECS systems are required to operate under a variety of conditions. Some of these conditions can involve exposure to airborne particulates, which can result in the accumulation of particulate debris on and around the heat absorption side of heat exchangers that use external air to absorb heat from the bleed air. Continued accumulation of such debris can ultimately lead to partial to complete or near-complete airflow blockage on the heat absorption side of the heat exchanger, which can result in reduced cooling performance, heat exchanger fan problems such as fan surge, broken fan blades, and system failure. Fan blade breakage can also involve failed journal bearings, turbine rotor rubs, and smoke events in the cabin. Other ECS components, including but not limited to turbines and compressors and their associated components, are also subject to wear and component breakage, which can also result in smoke events in the cabin. Smoke in cabin events are quite disruptive to flight operations, and can result in a disturbance to passengers, deployment of emergency equipment, and potential re-routing of flights.

A prior art aircraft having a smoke sensor arranged within the bleed air line is disclosed in US 2011/0192170 A1.

### BRIEF DESCRIPTION OF THE INVENTION

The present invention provides an aircraft as recited in claim 1, and a method of operating an environmental conditioning system as recited in claim 10.

### BRIEF DESCRIPTION OF THE DRAWINGS

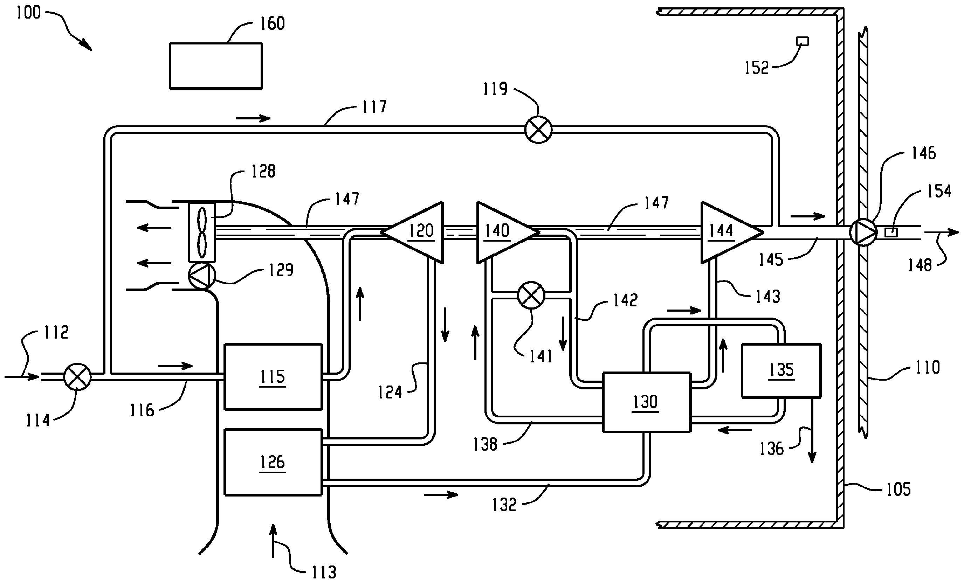

The subject matter which is regarded as the invention is particularly pointed out and distinctly claimed in the claims at the conclusion of the specification. The foregoing and other features, and advantages of the invention are apparent from the following detailed description taken in conjunction with the accompanying Figure, which is a schematic representation of an aircraft environmental conditioning system.

### DETAILED DESCRIPTION OF THE INVENTION

With reference to the Figure, the Figure schematically depicts an exemplary environmental air conditioning system 100 for an aircraft. The environmental air conditioning system 100 is inside housing 105 (only a portion of housing 105 is shown) disposed in an unpressurized area of an aircraft, separated from a pressurized area by bulkhead 110. As shown in the Figure, compressed air 112 from a compressed air source (not shown) such as a turbine engine bleed, an APU bleed, or an electrically-powered compressor is delivered through control valve 114 and conduit 116 to heat exchanger 115 (also referred to in the art as a primary heat exchanger) where it rejects heat to ambient air flowing through or across a heat absorption side of heat exchanger 115. Cooled compressed air is discharged from heat exchanger 115 to compressor 120. A portion of the air going to heat exchanger 115 can be controllably diverted through conduit 117 and control/expansion valve 119 to mix with the outlet of turbine 144 and control the temperature of conditioned air 148. Compressor 120 compresses its portion of the air from the heat exchanger 115, which also results in heating of the air. The further compressed air is discharged from compressor 120 through conduit 124 to heat exchanger 126 (also referred to in the art as a secondary heat exchanger) where it rejects heat to ambient air flowing through or across a heat absorption side of heat exchanger 126.

The ambient air 113 flowing through or across the heat absorption sides of heat exchangers 115 and 126 can be a ram air flow from a forward-facing surface of the aircraft. In conditions under which insufficient airflow is generated by the forward motion of the aircraft for operation of the heat exchangers 115, 116, the air flow can be assisted by operation of fan 128. Check/bypass valve 129 allows for bypass of the fan 128 when ram air flow is sufficient for the needs of the heat exchangers 115 and 116. Heat exchangers 115, 126 can share a flow path for the ambient cooling air, and can be integrated into a single unit with heat exchanger 115 sometimes referred to as a primary heat exchanger and heat exchanger 126 sometimes referred to as a secondary heat exchanger. Cooled air discharged from heat exchanger 126 is delivered through conduit 132 to a heat rejection side of heat exchanger 130. In the heat rejection side of heat exchanger 130, the air is further cooled to a temperature at or below the dew point of the air and flows into water removal unit 135 where liquid water 136 condensed from the air is removed. The dehumidified air flows through a heat absorption side of heat exchanger 130 where it is re-heated before being delivered through conduit 138 to turbine 140, where work is extracted as the air is expanded and cooled by turbine 140. A portion of the air going to turbine 140 can be diverted by valve 141 if needed to allow the temperature of the air at the inlet to the heat absorption side of heat exchanger 130 to be above freezing. The cooled expanded air discharged from the turbine 140 is delivered through conduit 142 to a heat absorption side of heat exchanger 130 where it along with the dehumidified air discharged from water collection unit 135 provides cooling needed to condense water vapor from air on the heat rejection side of heat exchanger 130. The air streams on the heat absorption side of the heat exchanger 130 are thus reheated. Heat exchanger 130 is also sometimes referred to as a condenser/reheater, and can be integrated with water removal unit 135 in a single unit. The reheated air from conduit 142 exiting from the heat absorption side of heat exchanger 130 flows through conduit 143 to turbine 144, where it is expanded and cooled, and then discharged from the system 100 through conduit 145 as conditioned air 148 to provide conditioned air to a cooling load, for example, the cabin of the aircraft. A check valve 146 at the bulkhead 110 prevents outflow from the pressurized area of the aircraft through the environmental air conditioning system 100 during flight when the system 100 is not being operated.

The environment air conditioning system 100 also includes a power transfer path 147 such as a rotating shaft that transfers power to the compressor 120 and fan 128 from work extracted by turbines 140 and 144. The moving parts associated with the power transfer path 147 as well as the moving parts and any parts that contact moving parts (e.g., bearings, bushings, supports, housings, vanes, blades, etc.) of any or all of the compressor 120, fan 128, or turbines 140 and 144 can be a source or contributing factor to catastrophic system failure that can result in a cabin smoke event. For example, over time the heat absorption side of the heat exchangers 115 and 126 can become clogged with airborne debris from inlet air 113. When this happens, the fan blades of fan 128 are subject to unexpected stress because sufficient air is not provided through the heat exchangers 115, 126 for smooth aerodynamic operation of the fan blades. If the blockage goes undetected, one or more fan blades can break, resulting in a bearing failure that generates smoke that is blown by the air cycle machine into the aircraft cabin.

As shown in the Figure, the environmental conditioning system 100 can be equipped with one or more smoke sensors such as any one or more of exemplary smoke sensors 152 or 154. By monitoring for smoke in the air cycle machine, unexpected or abnormal smoke levels can be detected that are indicative of an impending or actual equipment failure. A controller 160 is shown in the Figure, such as an electronic control unit (ECU), and is in communication (e.g., wireless communication, wired communication, or both wired and wireless communication) with the sensor(s) 152, 154 and can also be in communication with various other system components (e.g., electrical switches, pressure sensors, temperature sensors, flow sensors, control valves, etc.). The controller can be located inside or outside of the housing 105, and can be a local controller networked with other controllers or an aircraft systems controller, or can integrated with the system level controller. As shown in the Figure, each of the smoke sensors 152, 154 is positioned in a location to sense smoke emanating from different portions of the air cycle machine. Smoke sensor 152 is disposed in the housing, and can sense smoke outside of the conditioned air flow path emanating from any of the rotating devices such as fan 128, compressor 120, turbine 140, or turbine 144. Smoke sensor 154 is disposed in the conduit 145, and can sense smoke in the pressurized conditioned air flow that can be picked up as the conditioned air flow moves through any of the moving parts devices such as the compressor 120, turbine 140, or turbine 144. Additional smoke sensors can be disposed within the housing at or near any of the key components or where experimental modeling shows that smoke from a malfunctioning device can accumulate, and may therefore provide information to the controller 160 that is specific to identify the device exhibiting problems. The smoke sensors can be any of a variety of known types of sensors, including but not limited to optical smoke detectors or ionization smoke detectors.

In operation, the specific criteria used by the controller 160 to identify abnormal device operation will vary based on the specifics of the equipment and system design, but can be determined by experimentation with simulated failures. Some equipment failure modes can provide detectable smoke emission patterns in advance of actual failure (i.e., impending failure) or at the onset of failure (i.e., actual failure), allowing for the provision of an alert to flight crew or maintenance personnel in advance of any equipment failure. For example, the order of detection of smoke at each of a plurality of smoke sensors within the housing 105 and external to the conditioned flow path can provide information to controller 160 to identify likely sources of the smoke. Detection of smoke in the conditioned air flow path, e.g., from smoke sensor 154, could indicate smoke emanating from any of the compressor 120, the turbine 140, or the turbine 144.

In some embodiments, a first type of alert of impending equipment failure is made based on a first set of output criteria from the smoke sensor(s), and a second type alert is made at the onset of equipment failure based on a second set of output criteria from the smoke sensor(s). Of course, multiple sets of criteria can be utilized to generate multiple types of alerts. In some exemplary embodiments, the controller 160 can be configured to provide an alert to the flight crew to initiate a changeover to a parallel onboard air cycle machine or to descend to an altitude where cabin pressurization is not needed, thus limiting or avoiding equipment damage. Alternatively, the controller can automatically initiate a changeover to a parallel air cycle machine. An alert can also be made to ground maintenance personnel to inspect and service the heat exchanger airflow assembly, replacing any components that show signs of damage or that data collected by controller 160 indicate has been subjected to conditions that could cause undetectable damage to components (e.g., overheating of bearings). The same control options exist at the failure onset stage (e.g., alerting flight crew, automatically shutting down equipment and starting up a parallel onboard air cycle machine, or leaving an alert or data trail for ground-based maintenance personnel), of course with greater urgency for shutting down equipment. Even at the onset of equipment failure, pro-active detection at the source of the equipment failure can provide a valuable head start for any measures take to prevent smoke from entering the aircraft cabin, compared to the previous approach of waiting until smoke is smelled or observed already in the cabin.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An aircraft, comprising a pressurized area, an unpressurized area, and an environmental conditioning system (100) comprising
an air cycle machine disposed in a housing (105) in the unpressurized area of the aircraft for conditioning an airflow comprising hot compressed air by reducing its temperature and pressure to produce conditioned pressurized air;
a conduit (145) that receives the conditioned pressurized air for delivery to the pressurized area of the aircraft,
**characterised in that**:
a smoke sensor (152,154) is disposed within the conduit (145) or within the housing (105) external to the conduit (145); and
a controller (160) is in communication with the smoke sensor (152,154), and is configured to respond to detection of smoke by the smoke sensor (152,154).

2. The aircraft of claim 1, wherein the smoke sensor (154) is disposed within the conduit (145).

3. The aircraft of claim 2, wherein the conduit (145) includes a check valve (146) disposed in the conduit (145) between the housing (105) in the unpressurized area of the aircraft and a conduit outlet in the pressurized area of the aircraft, and the smoke sensor (154) is located in the conduit (145) between the check valve (146) and the conduit outlet.

4. The aircraft of claim 1, wherein the smoke sensor (152) is disposed within the housing (105) external to the conduit (145).

5. The aircraft of any of claims 1 to 3, comprising a further smoke sensor (152) disposed within the housing (105) external to the conduit (145).

6. The aircraft of any of claims 1 to 5, wherein the controller (160) is configured to alert aircraft flight crew in response to detection of smoke by the smoke sensor (152,154).

7. The aircraft of claim 6, wherein the controller (160) is further configured to shut down the air cycle machine in response to detection of smoke by the smoke sensor (152,154).

8. The aircraft of claim 6 or 7, wherein the controller (150) is further configured to start operation of a second air cycle machine.

9. The aircraft of any of claims 1 to 8, wherein the controller is configured to provide an alert for on-ground servicing of the air cycle machine.

10. A method of operating an aircraft environmental conditioning system (100), comprising
operating an air cycle machine disposed in a housing (105) in an unpressurized area of the aircraft to condition hot compressed air by reducing its temperature and pressure to produce conditioned pressurized air in a conduit (145) for delivery to a pressurized area of the aircraft;
monitoring output of a smoke sensor (152,154) disposed within the conduit (145) or within the housing (105) external to the conduit (145); and
alerting aircraft flight crew in response to detection of smoke by the smoke sensor (152,154).

11. The method of claim 10, further comprising shutting down the air cycle machine in response to detection of smoke by the smoke sensor (152,154).

12. The method of claims 10 or 11, further comprising starting operation of a second air cycle machine.

13. The method of any of claims 10 to 12, further comprising providing an alert for on-ground servicing of the air cycle machine.

14. The method of any of claims 10 to 13, wherein the aircraft environmental conditioning system comprises a smoke sensor (154) disposed within the conduit (145) and a smoke sensor (152) disposed within the housing (105) external to the conduit (145).

15. The method of any of claims 10 to 14, wherein the conduit (145) includes a check valve (146) disposed in the conduit (145) between the housing (105) in the unpressurized area of the aircraft and a conduit outlet in the pressurized area of the aircraft, and the smoke sensor (154) is located in the conduit between the check valve (146) and the conduit outlet.

## Patentansprüche

1. Flugzeug, umfassend einen unter Druck stehenden Bereich, einen nicht unter Druck stehenden Bereich und ein Klimatisierungssystem (100), Folgendes umfassend:
eine Luftkreislaufmaschine, die in einem Gehäuse (105) in dem nicht unter Druck stehenden Bereich des Flugzeugs zum Klimatisieren eines Luftstroms, der heiße komprimierte Luft umfasst, durch Reduzieren seiner Temperatur und seines Drucks angeordnet ist, um klimatisierte unter Druck stehende Luft zu erzeugen;
eine Leitung (145), die die klimatisierte unter Druck stehende Luft zum Liefern an den unter Druck stehenden Bereich des Flugzeugs aufnimmt,
**dadurch gekennzeichnet, dass**:
ein Rauchsensor (152, 154) innerhalb der Leitung (145) oder innerhalb des Gehäuses (105) außerhalb der Leitung (145) angeordnet ist; und
eine Steuerung (160) in Verbindung mit dem Rauchsensor (152, 154) steht und dazu konfiguriert ist, auf ein Erkennen von Rauch durch den Rauchsensor (152, 154) zu reagieren.

2. Flugzeug nach Anspruch 1, wobei der Rauchsensor (154) innerhalb der Leitung (145) angeordnet ist.

3. Flugzeug nach Anspruch 2, wobei die Leitung (145) ein Kontrollventil (146) beinhaltet, das in der Leitung (145) zwischen dem Gehäuse (105) in dem nicht unter Druck stehenden Bereich des Flugzeugs und einem Leitungsausgang in dem unter Druck stehenden Bereich des Flugzeugs angeordnet ist, und wobei der Rauchsensor (154) sich in der Leitung (145) zwischen dem Kontrollventil (146) und dem Leitungsausgang befindet.

4. Flugzeug nach Anspruch 1, wobei der Rauchsensor (152) innerhalb des Gehäuses (105) außerhalb der Leitung (145) angeordnet ist.

5. Flugzeug nach einem der Ansprüche 1 bis 3, einen weiteren Rauchsensor (152) umfassend, der innerhalb des Gehäuses (105) außerhalb der Leitung (145) angeordnet ist.

6. Flugzeug nach einem der Ansprüche 1 bis 5, wobei die Steuerung (160) dazu konfiguriert ist, eine Flugzeugbesatzung als Reaktion auf ein Erkennen von Rauch durch den Rauchsensor (152, 154) zu alarmieren.

7. Flugzeug nach Anspruch 6, wobei die Steuerung (160) ferner dazu konfiguriert ist, die Luftkreislaufmaschine als Reaktion auf das Erkennen von Rauch durch den Rauchsensor (152, 154) abzuschalten.

8. Flugzeug nach Anspruch 6 oder 7, wobei die Steuerung (150) ferner dazu konfiguriert ist, einen Betrieb einer zweiten Luftkreislaufmaschine zu starten.

9. Flugzeug nach einem der Ansprüche 1 bis 8, wobei die Steuerung dazu konfiguriert ist, einen Alarm für Bodenwartungen der Luftkreislaufmaschine bereitzustellen.

10. Verfahren zum Betreiben eines Flugzeugklimatisierungssystems (100), Folgendes umfassend:
Betreiben einer Luftkreislaufmaschine, die in einem Gehäuse (105) in einem nicht unter Druck stehenden Bereich des Flugzeugs zum Klimatisieren von heißer komprimierter Luft durch Reduzieren ihrer Temperatur und ihres Drucks angeordnet ist, um klimatisierte unter Druck stehende Luft in einer Leitung (145) zum Liefern an einen unter Druck stehenden Bereich des Flugzeugs zu erzeugen;
Überwachen einer Ausgabe eines Rauchsensors (152, 154), der innerhalb der Leitung (145) oder innerhalb des Gehäuses (105) außerhalb der Leitung (145) angeordnet ist; und
Alarmieren einer Flugzeugbesatzung als Reaktion auf ein Erkennen von Rauch durch den Rauchsensor (152, 154).

11. Verfahren nach Anspruch 10, ferner ein Abschalten der Luftkreislaufmaschine als Reaktion auf das Erkennen von Rauch durch den Rauchsensor (152, 154) umfassend.

12. Verfahren nach Anspruch 10 oder 11, ferner das Starten eines Betriebs einer zweiten Luftkreislaufmaschine umfassend.

13. Verfahren nach einem der Ansprüche 10 bis 12, ferner das Bereitstellen eines Alarms für Bodenwartungen der Luftkreislaufmaschine umfassend.

14. Verfahren nach einem der Ansprüche 10 bis 13, wobei das Flugzeugklimatisierungssystem einen Rauchsensor (154), der innerhalb der Leitung (145) angeordnet ist, und einen Rauchsensor (152) umfasst, der innerhalb des Gehäuses (105) außerhalb der Leitung (145) angeordnet ist.

15. Verfahren nach einem der Ansprüche 10 bis 14, wobei die Leitung (145) ein Kontrollventil (146) beinhaltet, das in der Leitung (145) zwischen dem Gehäuse (105) in dem nicht unter Druck stehenden Bereich des Flugzeugs und einem Leitungsausgang in dem unter Druck stehenden Bereich des Flugzeugs angeordnet ist, und wobei der Rauchsensor (154) sich in der Leitung zwischen dem Kontrollventil (146) und dem Leitungsausgang befindet.

## Revendications

1. Aéronef, comprenant une zone pressurisée, une zone non pressurisée et un système de conditionnement d'air (100) comprenant :
un groupe turbo-refroidisseur disposé dans un logement (105) dans la zone non pressurisée de l'aéronef pour climatiser un débit d'air comprenant de l'air chaud comprimé en réduisant sa température et sa pression pour produire de l'air pressurisé climatisé ;
un conduit (145) qui reçoit l'air pressurisé climatisé pour le distribuer à la zone pressurisée de l'aéronef,
**caractérisé en ce que** :
un détecteur de fumée (152, 154) est disposé à l'intérieur du conduit (145) ou à l'intérieur du logement (105) externe au conduit (145) ; et
un contrôleur (160) est en communication avec le détecteur de fumée (152, 154), et est configuré pour réagir à la détection de fumée par le détecteur de fumée (152, 154).

2. Aéronef selon la revendication 1, dans lequel le détecteur de fumée (154) est disposé à l'intérieur du conduit (145).

3. Aéronef selon la revendication 2, dans lequel le conduit (145) comprend un clapet anti-retour (146) disposé dans le conduit (145) entre le logement (105) dans la zone non pressurisée de l'aéronef et un orifice de sortie de conduit dans la zone pressurisée de l'aéronef, et le détecteur de fumée (154) est situé dans le conduit (145) entre le clapet anti-retour (146) et l'orifice de sortie de conduit.

4. Aéronef selon la revendication 1, dans lequel le détecteur de fumée (152) est disposé à l'intérieur du logement (105) externe au conduit (145).

5. Aéronef selon l'une quelconque des revendications 1 à 3, comprenant un détecteur de fumée supplémentaire (152) disposé à l'intérieur du logement (105) externe au conduit (145).

6. Aéronef selon l'une quelconque des revendications 1 à 5, dans lequel le contrôleur (160) est configuré pour alerter le personnel navigant de l'aéronef en réaction à la détection de fumée par le détecteur de fumée (152, 154).

7. Aéronef selon la revendication 6, dans lequel le contrôleur (160) est configuré en outre pour arrêter le groupe turbo-refroidisseur en réaction à la détection de fumée par le détecteur de fumée (152, 154).

8. Aéronef selon la revendication 6 ou 7, dans lequel le contrôleur (150) est configuré en outre pour démarrer le fonctionnement d'un second groupe turbo-refroidisseur.

9. Aéronef selon l'une quelconque des revendications 1 à 8, dans lequel le contrôleur est configuré pour fournir une alerte pour un entretien courant au sol du groupe turbo-refroidisseur.

10. Procédé de fonctionnement d'un système de climatisation d'air d'aéronef (100), comprenant
le fonctionnement d'un groupe turbo-refroidisseur disposé dans un logement (105) dans une zone non pressurisée de l'aéronef pour climatiser l'air chaud comprimé en réduisant sa température et sa pression pour produire de l'air sous pression climatisé dans un conduit (145) pour le distribuer à une zone pressurisée de l'aéronef ;
la surveillance de la sortie d'un détecteur de fumée (152, 154) disposé à l'intérieur du conduit (145) ou à l'intérieur du logement (105) externe au conduit (145) ; et
l'alerte au personnel navigant en réaction à la détection de fumée par le détecteur de fumée (152, 154).

11. Procédé selon la revendication 10, comprenant en outre l'arrêt du groupe turbo-refroidisseur en réaction à la détection de fumée par le détecteur de fumée (152, 154).

12. Procédé selon les revendications 10 ou 11, comprenant en outre le démarrage du fonctionnement d'un second groupe turbo-refroidisseur.

13. Procédé selon l'une quelconque des revendications 10 à 12, comprenant en outre la fourniture d'une alerte pour un entretien courant au sol du groupe turbo-refroidisseur.

14. Procédé selon l'une quelconque des revendications 10 à 13, dans lequel le système de climatisation d'air de l'aéronef comprend un détecteur de fumée (154) disposé à l'intérieur du conduit (145) et un détecteur de fumée (152) disposé à l'intérieur du logement (105) externe au conduit (145).

15. Procédé selon l'une quelconque des revendications 10 à 14, dans lequel le conduit (145) comprend un clapet anti-retour (146) disposé dans le conduit (145) entre le logement (105) dans la zone non pressurisée de l'aéronef et un orifice de sortie de conduit dans la zone pressurisée de l'aéronef, et le détecteur de fumée (154) est situé dans le conduit entre le clapet anti-retour (146) et l'orifice de sortie de conduit.
